(19) Europäisches Patentamt
European Patent Office
Office européen des brevets

(11) EP 1 923 200 A1

(12) **EUROPEAN PATENT APPLICATION**

(43) Date of publication:
**21.05.2008 Bulletin 2008/21**

(21) Application number: **06255921.6**

(22) Date of filing: **20.11.2006**

(51) Int Cl.:
***B29C 49/00*** (2006.01)
***B32B 27/32*** (2006.01)
***C08J 5/18*** (2006.01)
***C08K 5/00*** (2006.01)
***C08L 23/10*** (2006.01)

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Borealis Technology Oy**
**06101 Porvoo (FI)**

(72) Inventors:
- **Oysaed, Harry**
  **N-3960 Stathelle (NO)**
- **Jaaskelainen, Pirjo**
  **FIN-06150 Porvoo (FI)**
- **Ommundsen, Espen**
  **N-3960 Stathelle (NO)**
- **Johansen, Geir Morten**
  **N-3960 Stathelle (NO)**
- **Wachholder, Max**
  **Borealis GmbH**
  **A-4021 Linz (AT)**

(74) Representative: **Gordon, Kirsteen Helen**
**Frank B. Dehn & Co.**
**St Bride's House**
**10 Salisbury Square**
**London EC4Y 8JD (GB)**

(54) **Article**

(57) The present invention provides an article comprising a biaxially oriented polypropylene composition, wherein said composition comprises a multimodal polypropylene and a polymeric nucleating agent. The articles are suitable for use in the medical and food industries.

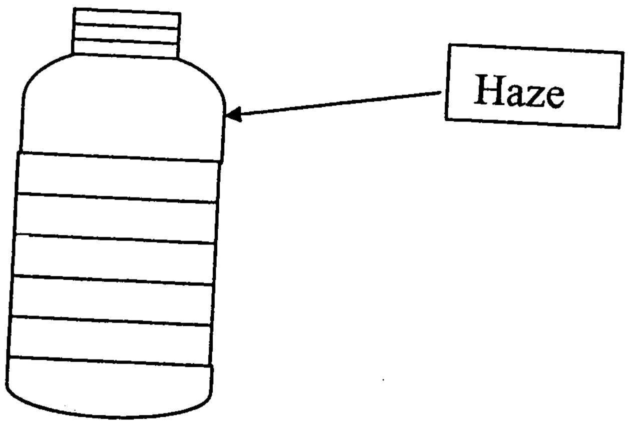


Figure 1

EP 1 923 200 A1

## Description

The present invention relates to articles comprising a polypropylene composition, to processes for preparing the afore-mentioned articles and to the polypropylene composition *per se.* Articles of particular interest in the present invention are containers (e.g. bottles, cups, vials etc) that are suitable for use in the medical and food industries.

Propylene polymers have excellent heat resistance and chemical resistance and, in the moulded form, have desirable mechanical properties such as rigidity and impact resistance. Propylene polymers are therefore an attractive option for the production of articles for use in the medical and food industries, which often contact chemicals, undergo sterilisation and are transported and stored prior to use.

A well known problem associated with articles made from propylene polymers, however, is that they tend to have poor transparency, e.g. haze may be as high as 15-20 % or greater on moulded articles having a wall thickness of 0.5 mm. This is a particular problem in the use of polypropylene containers in the medical industry where there are often regulatory requirements that containers having a certain transparency level be used. The requirement ensures, for example, that the amount of medicine in a container can be easily viewed and enables any foreign objects present within the container to be readily spotted.

In semicrystalline polymers, light scattered on the different units of their structure makes products moulded from the polymers opaque. More specifically, in the case of polypropylene, light is scattered on crystallites and spherulites (crystalline phases) and also on the interface between amorphous and crystalline phases having different refractive indices. In polypropylene the size of crystalline units is often large enough to interfere with visible light and this interference results in haze, which is often used to characterise plastic products. Haze is the total flux of light scattered within the angular range 2.5 to 90° and normalised to the total transmitted flux.

Adding a nucleating agent to polypropylene leads to an increase in the number of nuclei present during crystallisation which results in a decrease in spherulite size. When spherulite size reaches a critical value, i.e. it becomes smaller than the wavelength of the incident light, transparency is improved.

Various different nucleating agents have been used to improve transparency in this way. EP-A-0251340, for example, discloses injection stretch blow moulded (ISBM) containers for use in therapeutic applications that comprise polypropylene and a nucleating agent such as benzoic acid, sodium benzoate or more preferably dibenzylidenesorbitol or a derivative thereof. Similarly EP-A-1674238 teaches that high transparency containers are provided by ISBM compositions comprising polypropylene and inorganic non-sorbitol nucleating agents.

However when polypropylene compositions containing nucleating agents such as sorbitol or sorbitol derivatives are heated during the moulding process, odours are often generated and these remain in the final products. Leaching can also occur when these articles are filled with a liquid. These effects are clearly unacceptable in articles (e.g. containers) that are used in the medical and food industries, especially the medical industry.

Another agent that is known to have a nucleating effect on polypropylene is a polymer of vinyl cyclohexane. US 4,696,979, for example, discloses a propylene polymer composition comprising crystalline polypropylene and a polymer of a vinyl cycloalkane and teaches that the use of polymers of vinyl cycloalkanes improves both the crystallinity and the transparency of final products. The examples of EP-A-0151883 show that pressed sheets comprising a crystalline polypropylene and a polymer of a vinyl cycloalkane have a haze of about 20 % (measured according to ASTM D1003) whereas sheets prepared solely from polypropylene have a haze of about 60 %. However, a haze in the order of 20 % is still too high for containers that are to be used in the medical and food industries which, as mentioned above, require high transparencies for safety reasons.

US 5,286,540 teaches use of a similar polymeric nucleating agent. More specifically US 5,286,540 discloses that 0.0001-10 % by weight of the nucleating agent, 3-methylbutene-1 polymer, should be added to a propylene homopolymer or copolymer to improve the transparency of injection stretch blow moulded articles. The examples in US 5,286,540 show, however, that the transparency of containers comprising the polymeric nucleating agent are comparable to those wherein the nucleating agent is absent. In other words, the examples show that the 3-methylbutene-1 polymer has no or little effect on the transparency of the injection stretch blow moulded articles. Moreover the transparency level (measured as parallel light transmittance) of the articles is only around 16-26% .

A further problem associated with the polypropylene compositions described in US 5,286,540 is that ISBM is utilised as the processing technique, but it is well known that polypropylene has a narrow processing window when used in ISBM processes, i.e. polypropylene can only be stretched or blown only over a narrow temperature range. This is industrially unfavourable since close temperature control is both difficult and expensive to implement.

A need therefore exists for alternative polypropylene articles for use in the medical and food industries that have high transparency (i.e. low haze) and are facile to make, e.g. by ISBM. It has now been surprisingly found that articles having these advantages may be prepared by injection stretch blow moulding a polypropylene composition which comprises a multimodal polypropylene and a polymeric nucleating agent.

Thus viewed from one aspect the invention provides an article comprising a biaxially oriented polypropylene composition, wherein said composition comprises:

(i) a multimodal polypropylene, and
(ii) a polymeric nucleating agent.

Viewed from a further aspect the invention provides a process for making an article as hereinbefore described comprising injection stretch blow moulding a polypropylene composition, wherein said composition comprises:

(i) a multimodal polypropylene, and
(ii) a polymeric nucleating agent.

Viewed from a still further aspect the invention provides use of a polypropylene composition as hereinbefore defined for the manufacture of an article by injection stretch blow moulding.

Viewed from a yet further aspect the invention provides a biaxially oriented, polypropylene composition comprising:

(i) a multimodal polypropylene, and
(ii) a polymeric nucleating agent.

The polypropylene present in the composition of the invention is multimodal, preferably bimodal, with respect to comonomer content. It is thought that use of such polypropylene facilitates processing, especially by ISBM processes. More specifically, it is believed that the use of multimodal polypropylene increases the ISBM processing window whilst still providing final articles with excellent optical properties.

Multimodality may be achieved by use of a propylene copolymer and a propylene homopolymer. Alternatively, two propylene copolymers with different comonomer content may be present. In this latter case, the different copolymers ensure that the polypropylene is multimodal. Preferably therefore, where two propylene copolymers are present, the nature of the comonomer used in each component will be different and/or the amount of comonomer used in each component will be different, e.g. at least differing by 1 mol%, preferably at least 2 mol%, more preferably at least 3 mol%, still more preferably at least 5 mol%.

Whether the multimodal (e.g. bimodal) polypropylene comprises a propylene copolymer and a propylene homopolymer or two different propylene copolymers, it is preferred that at least 5 % wt, more preferably at least 10 % wt, still more preferably at least 20 %wt, e.g. at least 30 %wt of the total weight of polypropylene derives from each polymer.

Particularly preferred polypropylene for use in the invention comprises:

(A) at least 5 % wt of a propylene homopolymer or a propylene copolymer (e.g. a copolymer of propylene and comonomer selected from ethylene and/or $C_{4-10}$ alpha olefin); and
(B) at least 5 % wt of a propylene copolymer (e.g. a copolymer of propylene and comonomer selected from ethylene and/or $C_{4-10}$ alpha olefin).

To maximise the processing window in ISBM as well as the transparency of the final moulded articles, the polypropylene preferably comprises 10 to 90 wt % of polymer A, preferably 30 to 70 wt %, more preferably 40 to 60 wt % and most preferably 45 to 55 wt %. The composition also preferably comprises 10 to 90 wt % of polymer B, preferably 30 to 70 wt %, more preferably 40 to 60 wt % and most preferably 45 to 55 wt %.

As used herein the term "homopolymer" is intended to encompass polymers which consist essentially of repeat units deriving from a single monomer. Homopolymers, may for example, comprise at least 99 mol %, preferably at least 99.5 mol %, more preferably at least 99.9 mol % of repeat units deriving from a single monomer.

As used herein the term "copolymer" is intended to encompass polymers comprising repeat units from two or more monomers. In typical copolymers at least 1 mol %, preferably at least 2 mol %, more preferably at least 3 mol %, e.g. at least 5 mol % of repeat units derive from each of at least two different monomers. Copolymers may comprise $\alpha$-olefins having 2 or 4-10 carbon atoms. Examples of suitable monomers include ethylene, but-1-ene, pent-1-ene, hex-1-ene and oct-1-ene. Ethylene is preferred. Another preferred comonomer is but-1-ene. The total amount of any $\alpha$-olefin that is copolymerised with propylene may be up to 50 mol%, more preferably up to 20 mol%, e.g. up to 10 mol%.

Copolymers present in the polypropylene of the invention may be block copolymers and/or random copolymers, but preferably are random copolymers. By a random copolymer is meant herein that the comonomer is distributed mainly randomly along the polymer chain. Any known olefin polymerisation catalyst may be used to make such polymers, e.g. metallocene or Ziegler Natta catalysts. Preferred random copolymers are those made using Ziegler Natta catalysts. Such copolymers have been found to increase the transparency of the final moulded (e.g. ISBM) articles.

Polymer A preferably comprises up to 5 mol % comonomer, more preferably up to 4 mol % comonomer. Where polymer A is copolymeric, the comonomer is preferably ethylene or but-1-ene, e.g. ethylene. In some embodiments of the invention (e.g. when the moulded article is to be sterilised) it is preferred that polymer A is a homopolymer. Homopolymers tend to have higher melting points than copolymers and thus tend to increase the Tm of the final product. In other embodiments, however, it is preferred that polymer A be a copolymer.

The $MFR_2$ of polymer A may be in the range 0.1 to 100 g/10 min, preferably 1 to 60 g/10 min, more preferably 2 to 50 g/10 min, e.g. 5 to 30 g/10 min.

The isotacticity of polymer A when it is a homopolymer may be as high as 98% although will preferably be at least 85 %, e.g. in the range 90 to 95 %.

The comonomer content of polymer B may be in the range 0.5 to 10 mol %, preferably 2 to 7 mol %, and most preferably 3 to 6 mol %. A preferred comonomer is ethylene. Another preferred comonomer is but-1-ene.

Where both components A and B are copolymeric, it is preferred if polymer B has a higher comonomer content. Alternatively or additionally, polymer B may comprise a different comonomer to polymer A. The polypropylene present in the compositions of the invention may therefore be a terpolymer.

It will be appreciated that in certain circumstances it will be impossible to measure the properties of either polymer A or polymer B directly e.g. when a polymer is made second in a multistage process. The person skilled in the art will be able to work out the properties of each polymer from measurements taken on the first formed component and the overall properties of the polymer composition.

Polymer B generally has an $MFR_2$ of similar value to that of polymer A, e.g. within 5 g/10 min thereof, preferably within 3 g/10 min thereof.

The total comonomer content of the polypropylene is preferably 1 to 7 mol %, more preferably at least 1.5 mol%, e.g. 2.0 to 6 mol %, and most preferably 3 to 6 mol%.

The polypropylene of the present invention preferably has a melt flow rate in the range 0.1 to 100 g/10 min, preferably 1 to 60 g/10 min, more preferably 2 to 50 g/10 min, e.g. 5 to 30 g/10 min when measured according to ISO 1133 at 230 °C and a load of 2.16 kg.

The polypropylene of the present invention is also preferably multimodal, e.g. bimodal, with respect to molecular weight distribution (MWD), i.e. its molecular weight profile does not comprise a single peak but instead comprises the combination of two or more peaks (which may or may not be distinguishable) centred about different average molecular weights as a result of the fact that the polymer comprises two or more separately produced components. It is believed that the multimodal nature of the claimed composition allows improvements in processing properties. Preferably the MWD of the polypropylene is in the range 1.5 to 10, more preferably 2 to 7, still more preferably 3 to 5, e.g. about 2 to 4.

The xylene soluble fraction of the polypropylene can range from 0.1 to 20 %, preferably 1 to 15 wt%. Preferably the xylene soluble fraction of the polypropylene is less than 10 wt%, more preferably less than 7 wt%. The melting point of the polymer may range from 150 to 180°C, preferably around 160 to 170°C. The polymer is preferably partially crystalline, e.g. having a crystallinity of the order of 20 to 50 %, e.g. 25 to 40%.

The polypropylene composition of the invention further comprises a polymeric nucleating agent. Any conventional polymeric nucleating agent may be used, e.g. polymers derived from vinyl cycloalkanes and/or vinyl alkanes.

Preferably the polymeric nucleating agent contains vinyl compound units. A polymeric nucleating agent containing vinyl compound units may be a homopolymer of a vinyl compound, a copolymer of different vinyl compounds or a copolymer of a vinyl compound and an α-olefin. The copolymers may be random or block copolymers. α-Olefins which may be copolymerised with the vinyl compound may comprise 2 to 8 carbon atoms (e.g. ethylene, propylene and but-1-ene). Propylene is particularly preferred. The amount of any α-olefin which may be copolymerised with the vinyl compound may be up to 30 mol%, e.g. up to 10 mol%.

Preferably the polymeric nucleating agent is a homopolymer of a vinyl compound. Preferred polymeric nucleating agents present in the compositions of the present invention comprise vinyl compound units deriving from a vinyl compound of formula (I):

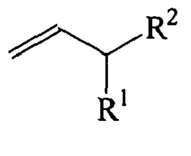

wherein $R^1$ and $R^2$, together with the carbon atom they are attached to, form an optionally substituted, fused ring system or saturated, unsaturated or aromatic ring, wherein said ring system or ring comprises 4 to 20 carbon atoms (e.g. 5 to 12 carbon atoms) or $R^1$ and $R^2$ independently represent a linear or branched $C_{4-30}$ alkane, a $C_{4-20}$ cycloalkane or a $C_{4-20}$ aromatic ring.

Preferably $R^1$ and $R^2$, together with the carbon atom they are attached to, form an optionally substituted, optionally $C_{1-2}$ bridged, 5 or 6 membered saturated, unsaturated or aromatic ring or $R^1$ and $R^2$ independently represent

a $C_{1-4}$ alkyl group.

In further preferred compounds of formula (I), $R^1$ and $R^2$, together with the carbon atom they are attached to, form a 6 membered ring. Still more preferably $R^1$ and $R^2$, together with the carbon atom they are attached to, form a non-aromatic ring (i.e. a vinyl cycloalkane). In particularly preferred compounds the ring formed by $R^1$ and $R^2$, together with the carbon atom they are attached to, is unsubstituted.

Representative examples of vinyl compounds which may be present in the polymeric nucleating agent used in the present invention include vinyl cyclohexane, vinyl cyclopentane, vinyl-2-methyl cyclohexane, 3-methyl-1-pentene, 4-methyl-1-pentene, 3-methyl-1-butene, 3-ethyl-1-hexene or a mixture thereof. Vinyl cyclohexane is a particularly preferred vinyl compound. Preferably the nucleating agent is not a polymer comprising units derived from 3-methylbutene-1.

The polypropylene present in the compositions of the invention may be prepared by simple blending (e.g. melt blending, preferably extrusion blending), by two or more stage polymerisation or by the use of two or more different polymerisation catalysts in a one stage polymerisation. Blending may, for example, be carried out in a conventional blending apparatus (e.g. an extruder). Propylene homopolymers and copolymers (e.g. random copolymers) that may be used in this invention are commercially available from various suppliers, e.g. Borealis GmbH.

Alternatively the polypropylene may be produced in a multi-stage polymerisation using the same catalyst, e.g. a metallocene catalyst or preferably a Ziegler-Natta catalyst. In a preferred multi-stage polymerisation a slurry polymerisation in a loop reactor is followed by a gas phase polymerisation in a gas phase reactor. Conventional cocatalysts, supports/carriers, electron donors etc. can be used.

A loop reactor - gas phase reactor system is described in EP-A-0887379 and WO92/12182, the contents of which are incorporated herein by reference, and is marketed by Borealis GmbH, Austria as a BORSTAR reactor system. The propylene polymer used in the invention is thus preferably formed in a two stage process comprising a first slurry loop polymerisation followed by gas phase polymerisation in the presence of a Ziegler-Natta catalyst.

With respect to the above-mentioned preferred slurry-gas phase process, the following general information can be provided with respect to the process conditions.

A temperature of from 40°C to 110°C, preferably between 60°C and 100°C, in particular between 80°C and 90°C is preferably used in the slurry phase. The pressure in the slurry phase is preferably in the range of from 20 to 80 bar, preferably 30 to 60 bar, with the option of adding hydrogen in order to control the molecular weight being available. The reaction product of the slurry polymerization, which preferably is carried out in a loop reactor, is transferred to a subsequent gas phase reactor, wherein the temperature preferably is within the range of from 50°C to 130°C, more preferably 80°C to 100°C. The pressure in the gas phase reactor is preferably in the range of from 5 to 50 bar, more preferably 15 to 35 bar, again with the option of adding hydrogen in order to control the molecular weight available. The residence time can vary in the reactor zones identified above. The residence time in the slurry reaction, for example the loop reactor, may be in the range of from 0.5 to 5 hours, for example 0.5 to 2 hours. The residence time in the gas phase reactor may be from 1 to 8 hours.

The properties of the polypropylene produced with the above-outlined process may be adjusted and controlled with the process conditions as known to the skilled person, for example by one or more of the following process parameters: temperature, hydrogen feed, comonomer feed, propylene feed, catalyst, type and amount of external donor and the split between two or more components of the polymer.

Preferably, the first polymer of the polypropylene of the invention is produced in a continuously operating loop reactor where propylene (and comonomer when required) is polymerised in the presence of a polymerisation catalyst (e.g. a Ziegler Natta catalyst) and a chain transfer agent such as hydrogen. The diluent is typically an inert aliphatic hydrocarbon, preferably isobutane or propane.

The second polymer can then be formed in a gas phase reactor using the same catalyst. Prepolymerisation can be employed as is well known in the art. Ziegler-Natta catalysts are preferred. The nature of the preferred Ziegler-Natta catalyst is described in numerous prior publications, e.g. US 5234879.

Nucleation of the propylene polymers for use in the invention may be carried out by conventional techniques, e.g. by blending. More preferably, however, when the nucleating agent is a polymer containing vinyl compound units, nucleated propylene polymers are made by modifying a polymerisation catalyst with vinyl compounds as hereinbefore described and using the modified catalyst for the polymerisation of propylene, optionally in the presence of comonomers. The catalyst systems and reaction conditions suitable for application in this latter method are described in WO99/24501. For instance, examples 1 and 2 described therein disclose a specific procedure which may be used to prepare a propylene polymer comprising a polymeric nucleating agent for use in the compositions of the present invention.

The resulting propylene polymers preferably comprise 0.01 to 1000 ppm wt of polymeric nucleating agent. Preferred polypropylene compositions of the invention comprise 0.1 to 100 ppm wt of a polymeric nucleating agent, more preferably 0.5 to 50 ppm wt of polymeric nucleating agent, still more preferably 1 to 10 ppm wt.

The polymer compositions of the present invention may also contain any conventional additives (e.g. process, heat and light stabilisers, colorants, antistatic agents, antioxidants, carbon black, pigments, flame retardants, foaming agents, blowing agents, IR absorber, e.g. Sb and carbon black etc). A filler may also be present (e.g. talc). Preferably,

however, the composition does not contain any non-polymeric nucleating agents.

The polypropylene composition is particularly suitable for use in the manufacture of articles by ISBM processes. These stretch the polymer at temperatures below the polymer melting point in a stretch blow moulding step and thereby impact biaxial orientation. This improves the physical and optical properties of the article. In fact, articles made by ISBM of the polypropylene compositions hereinbefore described have surprisingly good transparency (i.e. low haze). Moreover the polypropylene compositions also have larger processing windows for the stretch blow moulding step compared to unimodal random polypropylene copolymers. As a result, articles with low haze can be prepared by ISBM without highly precise temperature control, and improved throughput may be achieved.

Two types of ISBM process are generally practised. In the single-stage process a preform is injection moulded and blown before it is allowed to cool. In the two-stage process the injection moulded preform is allowed to cool before it is reheated and blown into a container. These processes are well known and the person skilled in the art would be able to choose appropriate process conditions. Ideally however, the stretching temperatures used are between 110°C and 160 °C, e.g. 130°C.

Control of the temperature of the polymer during the biaxial stretching step is critical. If the temperature is too high the stretched polymer will include areas of melted polymer, which reduces the molecular orientation, and will show variation in sample thickness. If the temperature is too low it will not be possible to biaxially stretch the polymer without the polymer failing, e.g. the stretch rod may puncture the preform. The processing window for any given polymer is the temperature range over which the polymer can in practice be biaxially stretched.

In the Examples discussed below and for the processing window ranges given below, the processing window for biaxial stretching is measured by stretch blow moulding of 300 ml polypropylene bottles on a one-cavity SIG Corpoplast LB01HR machine from 17 g pre-forms. This machine is equipped with two heater boxes, each having 5 IR lamps (L1-L5), but only one box was used in the determination of processing windows. L1 and L2 were 2500 watt lamps and L3, L4 and L5 were 2000 watt. The setting ratio of the lamps in the heater box was L1/L2/L3/L4/L5 46/57/85/85/54. All preforms were heated for the same period of time, only total heating was changed. Preforms were heated in two periods, HT1 and HT2. Between HT1 and HT2 is a conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling was provided to prevent surface melting. Cooling was carried out at 80% of the fan capacity. Additionally the preform was rotated on a mandrel throughout heating and conditioning at a speed of 100 rpm. After CT2, all bottles were blown under the same conditions. The preform was brought into the bottle mould and first stretched at a speed of 1000 mm/s. A pressure of 6 bar for 1.2 seconds was then used to blow up the bottle.

For each sample, the total heating energy was changed in steps and the resulting pre-form temperatures recorded to find the upper preform temperature and lower preform temperature at which bottles without visible failures can be blown. This range is defined as the processing window.

Visible failures will be readily determined by those skilled in the art. For example, temperatures that are too low for stretching causes the stretch rod to puncture the preform. Temperatures that are too high for stretching cause the polymer to melt and leads to variations in the thickness of the blown articles.

The polymer compositions of the invention exhibit a reasonable processing window (measured as hereinbefore described). Preferably the processing window is 5 °C or more, still more preferably 7 °C or more.

Moreover the moulded articles that result from ISBM processes have excellent mechanical and optical properties. Haze values of less than 10%, preferably less than 8%, more preferably less than 5 %, e.g. less than 2 % are achievable on ISBM articles having a thickness of 0.5 mm. It is envisaged that the polymer composition of the invention, when biaxially stretched results in a surface of more perfect molecular orientation leading to improved clarity.

The tensile modulus of moulded articles that result from ISBM processes is preferably more than 800 MPa, more preferably higher than 1000 MPa, still more preferably higher than 1100 MPa.

The Charpy notched impact strength (as measured according to ISO 179 at 23 °C) of moulded articles that result from ISBM processes is preferably at least 4.0 kJ/$m^2$, more preferably at least 6.0 kJ/$m^2$.

Representative examples of articles that may be prepared using the polypropylene compositions hereinbefore described include containers for use in the medical and food industries, e.g. containers for use in the medical industry. These include bottles, bags and boxes for use in both industries as well as syringes, pipettes, vials, ampoules, petri dishes, culture tubes, test tubes and biohazard waste containers for use in the medical industry.

The invention will now be described with further reference to the following non-limiting examples and figures. Figure 1 shows where haze was measured on a blown bottle.

EXAMPLES

**Analytical Tests**

Values quoted in the description/examples are measured according to the following tests:

• Melt flow rate ($MFR_2$) was measured according to ISO 1133 at 230°C and a load of 2.16 kg.

• Density is measured according to ISO 1183

• Comonomer content was determined in a known manner based on FTIR measurements calibrated with $^{13}C$ NMR.

• The weight average molecular weight, Mw and the molecular weight distribution (MWD = Mw/Mn wherein Mn is the number average molecular weight) is measured by a method based on ISO 16014-4:2003. A waters 150CV plus instrument was used with column 3 x HT&E styragel from Waters (divinylbenzene) and trichlorobenzene (TCB) as solvent at 140 °C. The column set was calibrated using universal calibration with narrow MWD PS standards (the Mark Hoiwinks constant K: $9.54x10^{-5}$ and a: 0.725 for PS, and K: $3.92x10^{-4}$ and a: 0.725 for PE).

• The xylene soluble fraction (XS) was determined as follows:

2.0 g of polymer are dissolved in 250 mm p-xylene at 135°C under agitation. After 30± minutes, the solution was allowed to cool for 15 minutes at ambient temperature and then allowed to settle for 30 minutes at 25± 0.5°C. The solution was filtered with filter paper into two 100 mm flask. The solution from the first 100 mm vessel was evaporated in nitrogen flow and the residue dried under vacuum at 90°C until constant weight is reached. Xylene soluble fraction (percent) can then be determined as follows:

$$XS\% = (100 \text{ x } m_1 \text{ x } v_0)/(m_0 \text{ x } v_1),$$

wherein $m_0$ designates the initial polymer amount (grams), $m_1$ defines the weight of residue (grams), $v_0$ defines the initial volume (milliliter) and $v_1$ defines the volume of analyzed sample (milliliter).

The solution from the second 100 ml flask was treated with 200 ml of acetone under vigorous stirring. The precipitate was filtered and dried in a vacuum oven at 90°C. This solution can be employed in order to determine the amorphous part of the polymer (AM) using the following equation:

$$AM\% = (100 \text{ x } m_1 \text{ x } v_0)/(m_0 \text{ x } v_1)$$

wherein $m_0$ designates the initial polymer amount (grams), $m_1$ defines the weight of residue (grams), $v_0$ defines the initial volume (milliliter) and $v_1$ defines the volume of analyzed sample (milliliter).

• Melting temperature ($T_m$), crystallization temperature ($T_c$) and degree of crystallinity ($X_c$) were measure according to ISO11357. The samples were cut from compression molded, 0.2 mm films. The measurements were performed at the following conditions:

| Stage | Temperature Program | Heating/Cooling Rate *°C/min* | Time *min* |
|---|---|---|---|
| 1st heating | 20-225 °C | 10 | |
| Isothermal | 225 °C | | 5 |
| Cooling | 225-20 °C | -10 | |
| Isothermal | 20 | | 1 |
| 2nd heating | 20-225 °C | 10 | |

The $T_m$ and $X_c$ were determined from the second heating. The degree of crystallinity (Xc) was calculated using a melting enthalpy of 100 % PP equal to 209 J/g.

• Haze was measured on injection moulded plaques according to ASTM D1003 at a thickness of 1 mm unless otherwise indicated and on injection stretch blow moulded bottles according to ASTM D1003 at a thickness of 0.5 mm unless otherwise indicated.

• Charpy notched impact strength was measured according to ISO 179 at 23 °C (room temperature, if not otherwise mentioned) using injection molded test specimen as described in EN ISO 1873-2 (80 x 10 x 4 mm)

• Tensile modulus was measured on specimen according to ISO3167 (Multipurpose test specimen, type A (injected moulded) or B (milled)) according to ISO 527-2:1993. The modulus was measured at a speed of 50mm/min

**Materials**

The following polypropylene compositions were employed in the examples:

| | Component (A) | Component (B) | $MFR_2$ (g/10 mins) | $C_2$ (% mol) | Nucleating Agent |
|---|---|---|---|---|---|
| 1 | $C_3/C_2$ random copolymer | $C_3/C_2$ random copolymer | 19 | 5.7 | Polymer of VCH# |
| 2 | PP homopolymer | $C_3/C_2$ copolymer | 26 | 3.5 | Polymer of VCH# |
| CE * | Random $C_2/C_3$ copolymer | | 20 | 5.0 | Millad 3988 |
| * Comparative Example<br># Vinyl cyclohexane | | | | | |

**Production of Polypropylene Compositions**

Compositions 1 and 2

These were prepared according to the process described in WO99/24478, Example 8 using a multistage polymerisation process comprising a prepolymerisation, a polymerisation in a loop reactor (slurry polymerisation), followed by a final polymerisation in a gas phase reactor. In the case of composition 1, ethylene was additionally supplied to the loop reactor during slurry polymerisation. The polymerisation conditions used are summarised in the Table below. The ZN catalyst used is described in US5,234,879.

Composition 3

This is a commercially available random polypropylene ethylene polymer that contains 1700 ppm Millad 3988.

| | 1 | 2 | Comp. Ex |
|---|---|---|---|
| Al/D (mol/mol) | 10 | 10 | |
| Loop/GPR Split % | 53/47 | 48/52 | |
| Loop | | | |
| Temperature (°C) | 80 | 85 | |
| MFR2 (g/10 min) | 21 | 26 | |
| Ethylene content (wt-%) | 2.5 | 0.0 | |
| GPR | | | |
| Temperature (°C) | 85 | 85 | |
| Final product | | | |
| Ethylene content (wt-%) | 3.8 | 2.3 | 3.3 |
| MFR2 (g/10 min) | 19 | 26 | 20 |
| XS (%) | 6.3 | 5.2 | 6.5 |
| Tm (°C) | 148 | 162 | 148 |
| Tc (°C) | 119 | 127 | 120 |

**Example 1 - Injection Stretch Blow Moulding of polypropylene compositions to form bottles**

PPreX® pre-forms with neck dimension 38/10mm and weight 17 g were injection moulded at standard conditions for PP having a $MFR_2$ of 20.

Polypropylene bottles (300 ml) were stretch blow moulded on a one-cavity SIG Corpoplast LB01HR machine from the pre-forms. This machine is equipped with two heater boxes, each having 5 IR lamps (L1-L5), but only one box was used in these experiments. L1 and L2 were 2500 watt lamps and L3, L4 and L5 were 2000 watt. The setting ratio of the lamps in the heater box was L1/L2/L3/L4/L5 46/57/85/85/54. All preforms were heated for the same period of time, only total heating was changed. Preforms were heated in two periods, HT1 and HT2. Between HT1 and HT2 is a

conditioning time, CT1. After HT2 and before stretching is a conditioning time, CT2. HT1, HT2, CT1 and CT2 were 15 seconds, 4.6 seconds, 13 seconds and 10 seconds respectively. During heating of the preforms, surface cooling was provided to prevent surface melting. Cooling was carried out at 80% of the fan capacity. Additionally the preform was rotated on a mandrel throughout heating and conditioning at a speed of 100 rpm. After CT2, all bottles were blown under the same conditions. The preform was brought into the bottle mould and first stretched at a speed of 1000 mm/s. A pressure of 6 bar for 1.2 seconds was then used to blow up the bottle.

For each sample, the total heating energy was changed in steps and the resulting pre-form temperatures recorded to find the upper preform temperature and lower preform temperature at which bottles without visible failures can be blown (the processing window). The results are shown in the table below.

| | CE | 2 | 1 |
|---|---|---|---|
| Upper Heating value (%) | 68 | 78 | 64 |
| Upper Temperature (°C) | 136 | 155 | 139 |
| Lower Heating value (%) | 62 | 68 | 56 |
| Lower Temperature (°C) | 133 | 150 | 132 |
| Processing window (°C) | 3 | 5 | 7 |

For all samples haze was then analysed at the top of each bottle, as shown in figure 1, according to ASTM D1003. The thickness of the top section of the bottles (i.e. where haze was measured) was also determined using a micrometer (screw form with gauge).

For comparison purposes, the haze of injection moulded plaques prepared from each of the compositions was also determined.

| | 1 | 2 | CE |
|---|---|---|---|
| Tc (°C) | 119 | 127 | 120 |
| IM Plaques: | | | |
| Haze (%) | 29 | 36 | 10 |
| Thickness (mm) | 1 | 1 | 1 |
| Tensile modulus (MPa) | 885 | 1200 | 1150 |
| Charpy Impact ($kJ/m^2$) | 7.6 | 5.3 | 6.0 |
| ISBM Bottles: | | | |
| Processing window (°C) | 7 | 5 | 3 |
| Haze (%) | 1.4 | 4.5 | 2.7 |
| Thickness (mm) | 0.5 | 0.62 | 0.33 |

The results show that the articles of the present invention have a low haze (i.e. high transparency). The article made by ISBM of composition 1 has a lower haze at a thickness of 0.5 mm than the article made by ISBM of the comparative example at a smaller thickness (0.33 mm).

Moreover the results show that the polypropylene composition of the invention advantageously has a broader processing window than random propylene copolymer. This facilitates ISBM.

## Claims

**1.** An article comprising a biaxially oriented polypropylene composition, wherein said composition comprises:

(i) a multimodal polypropylene, and
(ii) a polymeric nucleating agent.

**2.** An article as claimed in claim 1, wherein said multimodal polypropylene comprises a propylene copolymer and a propylene homopolymer.

**3.** An article as claimed in claim 1, wherein said multimodal polypropylene comprises two different propylene copolymers.

**4.** An article as claimed in claim 2 or claim 3, wherein at least 5 % wt, more preferably at least 10 % wt of the total weight of polypropylene derives from each polymer.

**5.** An article as claimed in any preceding claim, wherein said multimodal polypropylene comprises:

(A) at least 5 % wt of a propylene homopolymer or a propylene copolymer (e.g. a copolymer of propylene and comonomer selected from ethylene and/or $C_{4-10}$ alpha olefin); and
(B) at least 5 % wt of a propylene copolymer (e.g. a copolymer of propylene and comonomer selected from ethylene and/or $C_{4-10}$ alpha olefin).

**6.** An article as claimed in any one of claims 2 to 5, wherein said copolymer(s) is a random propylene copolymer.

**7.** An article as claimed in any one of claims 2 to 6, wherein said copolymer(s) is a propylene ethylene copolymer.

**8.** An article as claimed in any preceding claim, wherein the ethylene content of the composition is 1 to 7 mol%.

**9.** An article as claimed in any preceding claim, wherein the melt flow rate of the composition is 5 to 30 g/10 min when measured according to ISO 1133 at 230 °C and a load of 2.16 kg.

**10.** An article as claimed in any preceding claim, wherein said polymeric nucleating agent is a homopolymer of a vinyl compound.

**11.** An article as claimed in claim 10, wherein said vinyl compound is of the formula (I)

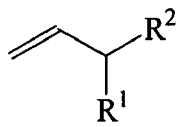

(I)

wherein $R^1$ and $R^2$, together with the carbon atom they are attached to, form an optionally substituted, fused ring system or saturated, unsaturated or aromatic ring, wherein said ring system or ring comprises 4 to 20 carbon atoms (e.g. 5 to 12 carbon atoms) or $R^1$ and $R^2$ independently represent a linear or branched $C_{4-30}$ alkane, a $C_{4-20}$ cycloalkane or a $C_{4-20}$ aromatic ring.

**12.** An article as claimed in any preceding claim, wherein said vinyl compound is selected from vinyl cyclohexane, vinyl cyclopentane, vinyl-2-methyl cyclohexane, 3-methyl-1-pentene, 4-methyl-1-pentene, 3-methyl-1-butene, 3-ethyl-1-hexene or a mixture thereof.

**13.** An article as claimed in any preceding claim, wherein the amount of polymeric nucleating agent is 0.1 to 100 ppm wt, preferably 0.5 to 50 ppm wt.

**14.** An article as claimed in any preceding claim, wherein said composition does not comprise any non-polymeric nucleating agents.

**15.** An article as claimed in any preceding claim, wherein said article has a haze of less than 10 % as measured on an injection stretch blow moulded bottle having a thickness of 0.5 mm.

**16.** An article as claimed in any preceding claim, wherein said multimodal polypropylene has a processing window of 5 °C or more.

**17.** An article as claimed in any preceding claim which is a container for use in the medical or food industry.

**18.** A process for making an article as claimed in any preceding claim comprising injection stretch blow moulding a polypropylene composition, wherein said composition comprises:

(i) a multimodal polypropylene, and
(ii) a polymeric nucleating agent.

**19.** Use of a polypropylene composition as defined in any one of claimed 1 to 14 for the manufacture of an article by injection stretch blow moulding.

**20.** A biaxially oriented, polypropylene composition as defined in any of claims 1 to 14.

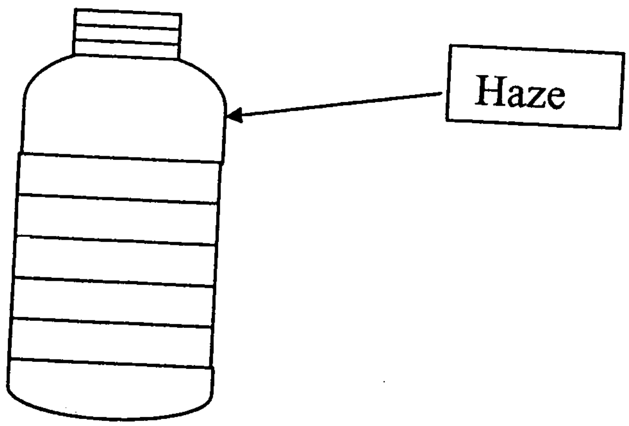


Figure 1

European Patent Office

# EUROPEAN SEARCH REPORT

Application Number
EP 06 25 5921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 5 286 540 A (SUGA YOSHINORI [JP] ET AL) 15 February 1994 (1994-02-15)<br>* the whole document * | 1-20 | INV.<br>B29C49/00<br>B32B27/32<br>C08J5/18<br>C08K5/00<br>C08L23/10 |
| X | WO 02/38383 A (UCB SA [BE]; JESCHKE MICHAEL [GB]) 16 May 2002 (2002-05-16)<br>* claims 1,3,4,12,13,15,16,18,19 *<br>* page 4, line 11 *<br>* page 7, line 7 - line 9 *<br>* page 9, line 6 - line 13 *<br>* page 13, line 17 - line 19 * | 1-20 | |
| X | EP 0 903 356 A1 (MITSUI CHEMICALS INC [JP]) 24 March 1999 (1999-03-24)<br>* paragraphs [0016], [0-18], [0119], [0120], [0202], [0232], [0236], [0237], [0250] * | 1,10-12 | |
| A | WO 99/24478 A (BOREALIS AS [DK]; KARBASI AMIR [FI]; LESKINEN PAULI [FI]; JAEAESKELAEI) 20 May 1999 (1999-05-20)<br>* the whole document * | 1-20 | TECHNICAL FIELDS SEARCHED (IPC) |
| D,A | EP 1 674 238 A (TOTAL PETROCHEMICALS RES FELUY [BE]) 28 June 2006 (2006-06-28)<br>* the whole document * | 1-20 | B29C<br>B32B<br>C08J<br>C08K<br>C08L |

The present search report has been drawn up for all claims

3

| Place of search | Date of completion of the search | Examiner |
|---|---|---|
| Munich | 11 May 2007 | Lippert, Sigrid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 06 25 5921

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2007

| Patent document cited in search report | Publication date | Patent family member(s) | Publication date |
|---|---|---|---|
| US 5286540 A | 15-02-1994 | NONE | |
| WO 0238383 A | 16-05-2002 | AU 2303002 A | 21-05-2002 |
| | | CN 1471463 A | 28-01-2004 |
| | | EP 1562748 A1 | 17-08-2005 |
| | | JP 2004523601 T | 05-08-2004 |
| | | US 2004197584 A1 | 07-10-2004 |
| EP 0903356 A1 | 24-03-1999 | CA 2256707 A1 | 04-12-1997 |
| | | CN 1219941 A | 16-06-1999 |
| | | DE 69734156 D1 | 13-10-2005 |
| | | DE 69734156 T2 | 06-07-2006 |
| | | WO 9745463 A1 | 04-12-1997 |
| | | JP 3749547 B2 | 01-03-2006 |
| | | KR 20000016063 A | 25-03-2000 |
| | | US 2001025090 A1 | 27-09-2001 |
| WO 9924478 A | 20-05-1999 | AT 203548 T | 15-08-2001 |
| | | AU 744410 B2 | 21-02-2002 |
| | | AU 1035699 A | 31-05-1999 |
| | | BR 9813986 A | 26-09-2000 |
| | | CA 2308076 A1 | 20-05-1999 |
| | | CN 1285850 A | 28-02-2001 |
| | | DE 69801236 D1 | 30-08-2001 |
| | | DE 69801236 T2 | 16-05-2002 |
| | | EP 1028984 A1 | 23-08-2000 |
| | | ES 2162471 T3 | 16-12-2001 |
| | | FI 974175 A | 08-05-1999 |
| | | JP 2001522903 T | 20-11-2001 |
| | | PL 340376 A1 | 29-01-2001 |
| | | US 6437063 B1 | 20-08-2002 |
| EP 1674238 A | 28-06-2006 | WO 2006067178 A1 | 29-06-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0251340 A
- EP 1674238 A
- US 4696979 A
- EP 0151883 A
- US 5286540 A
- EP 0887379 A
- WO 9212182 A
- US 5234879 A
- WO 9924501 A
- WO 9924478 A